# EUROPEAN PATENT APPLICATION

(11) **EP 2 958 304 A1**
(43) Date of publication of application: **23.12.2015**
(21) Application number: 14191200.6
(22) Date of filing: 31.10.2014
(51) Int. Cl.: H04M 1/725

(54) **Mobile terminal and control method thereof**

(30) Priority: 19.06.2014 KR 20140075214
(71) Applicant: LG Electronics Inc., Yeongdeungpo-gu Seoul 150-721 (KR)
(72) Inventor: Kwon, Yeaeun, 137-893 Seoul (KR); Kim, Seunghee, 137-893 Seoul (KR)
(74) Representative: Ter Meer Steinmeister & Partner

(57) **Abstract**

A mobile terminal (100) is disclosed. The mobile terminal (100) comprises a display unit (151); a sensing unit (140) being formed on one side of the mobile terminal (100) and sensing other terminals located within a predetermined distance from the mobile terminal (100); a wireless communication unit (110) for transmitting and receiving information to and from a terminal sensed by the sensing unit (140); and a controller (180) transmitting screen information about a displayed image to other terminals through the wireless communication unit (110) when the sensing unit (140) senses other terminals so that other images related to an image displayed on the display unit (151) can be displayed on the other terminals.

## Description

### CROSS-REFERENCE TO RELATED APPLICATIONS

This application claims the benefit of earlier filing date and right of priority to Korean Patent Application No. 10-2014-0075214, filed on 19 June, 2014, the contents of which are incorporated by reference herein in their entirety.

### Field of the invention

The present invention relates to a mobile terminal transmitting information about a displayed screen to other terminals and a method for controlling the mobile terminal.

### Related Art

Terminals can be divided into mobile/portable terminals and stationary terminals depending on their mobility. Mobile terminals can be further divided into handheld terminals and vehicle mounted terminals depending on whether they can be carried directly by users.

Functions of mobile terminals are diversified. For example, mobile terminals of today are equipped with functions of data and voice communication, image and video capture through a camera, voice recording, playback of music files through a speaker system, and displaying an image or a video on a display unit. Some mobile terminals are equipped with a function of playing electronic games or capable of carrying out a function of a multimedia player. In particular, mobile terminal of recent model are capable of receiving multi-cast signals providing visual content such as a broadcasting, video, or television program.

As functions of mobile terminals are diversified, the mobile terminal is now implemented in the form of a multimedia player. As mobile terminals are implemented in the form of a multimedia player, however, the user has to carry out a complicated operation, which increases inconvenience in using the mobile terminal. Moreover, since a UI screen capable of accommodating various functions is needed to provide a simplified operation for the user, there arises a problem that the display screen of the mobile terminal becomes more complicated.

### SUMMARY

The present invention has been made in an effort to provide a mobile terminal transmitting screen information about a displayed image to other sensed terminals and a method for controlling the terminal.

To achieve the technical object above, a mobile terminal according to one embodiment of the present invention comprises a display unit; a sensing unit being formed on one side of the mobile terminal and sensing other terminals located within a predetermined distance from the mobile terminal; a wireless communication unit for transmitting and receiving information to and from a terminal sensed by the sensing unit; and a controller transmitting screen information about a displayed image to other terminals through the wireless communication unit if the sensing unit senses other terminals so that other images related to an image displayed on the display unit can be displayed on the other terminals.

The sensing unit can sense one side of another terminal making contact with one side of a mobile terminal.

The screen information can include at least one of current screen information of an image displayed on the display unit, previous screen information with respect to a current screen, and next screen information with respect to the current screen.

The sensing unit can comprise a first sensing unit disposed in one side of the mobile terminal and a second sensing unit disposed in the opposite side of the first sensing unit; the controller can transmit previous screen information with respect to a current screen or next screen information with respect to the current screen to a first different terminal sensed by the first sensing unit or a second different terminal sensed by the second sensing unit respectively.

The sensing unit can be formed on a upper side and a lower side; or on the left side and right side of the mobile terminal.

The controller, if the sensing unit senses a different terminal, can transmit to the different terminal menu information for editing an image displayed on the display unit and if one of the menu displayed on the different terminal is selected, can display an editing screen corresponding to the selected menu item on the display unit.

If another terminal located within a predetermined distance from the different terminal is sensed sequentially by the different terminal and the first sensing unit, the controller can transmit to the another terminal input screen information for entering new information with respect to either of the mobile terminal or the different terminal.

If a different terminal is displaced sequentially from one part to the other part of the sensing unit, the controller can transform either of the display unit and the different terminal to a predefined display mode.

Meanwhile, a mobile terminal according to another embodiment of the present invention comprises a display unit displaying a file list for a plurality of files, a sensing unit being formed on one side of the mobile terminal and sensing a different terminal located within a predetermined distance from the mobile terminal; a wireless communication unit for transmitting and receiving information to and from the different terminal sensed by the sensing unit; and a controller transmitting file information to the different terminal through the wireless communication unit if the sensing unit senses the different terminal so that the different terminal can play one file from among a file list displayed on the display unit.

The sensing unit can sense a different side of a different terminal, touched by one side of the mobile terminal.

The sensing unit can include a first sensing unit disposed on one side of the mobile terminal and a second sensing unit disposed on the opposite side of the first sensing unit.

The sensing unit can be formed on a upper side and a lower side; or on the left side and right side of the mobile terminal.

If one file is selected from a displayed file list according to a predetermined method, the controller can transmit file information about the selected file to the different terminal sensed.

The predetermined method can be a touch input with respect to one file selected from the displayed file list.

The controller can transmit to the different terminal file information with respect to one file selected from the displayed file list corresponding to the sensed location of the different terminal.

The controller can transmit file information with respect to a file of the highest priority selected from the displayed file list to the different terminal sensed.

If the different terminal is displaced sequentially from one part to the other part of the sensing unit, the controller can transform any one of different terminals to a predetermined display mode.

If a different terminal is sensed by the sensing unit while one file selected from the displayed file list is being played, the controller can display either of a representative thumbnail image for each interval of the file under execution and a control menu on the different terminal by transmitting file information about the file under execution to the different terminal.

Meanwhile, a method for controlling a mobile terminal according to one embodiment of the present invention comprises displaying an image; sensing a different terminal located within a predetermined distance from one side of the mobile terminal; and transmitting screen information about the displayed image to the different terminal so that the different terminal can display a screen related with the displayed image.

According to at least one of embodiments of the present invention, user intuitiveness or user convenience is improved.

The additional application scope of the present invention will be clearly understood from the detailed descriptions given below. However, since various modifications and changes of the present invention can be clearly understood by those skilled in the art within the technical principles and scope of the present invention, it should be understood that detailed descriptions and particular embodiments such as the preferred embodiments of the present invention are provided only as examples.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.
FIG. 1 is a block diagram of a mobile terminal according to an embodiment;
FIG. 2 is one example of a flow diagram illustrating a method for controlling a mobile terminal according to one embodiment of the present invention;
FIGs. 3 to 5 are various examples of a sensing unit disposed according to one embodiment of the present invention;
FIGs. 6 to 13 are various example of an e-mail screen changed according to one embodiment of the present invention;
FIGs. 14 to 15 are various examples of a calendar screen changed according to one embodiment of the present invention;
FIGs. 16 to 18 are various examples of a web screen changed according to one embodiment of the present invention;
FIG. 19 is one example of a flow diagram illustrating a method for controlling a mobile terminal according to another embodiment of the present invention; and
FIGs. 20 to 27 are various example of a content screen changed according to another embodiment of the present invention.

### DETAILED DESCRIPTION

Arrangements and embodiments may now be described more fully with reference to the accompanying drawings, in which exemplary embodiments may be shown. Embodiments may, however, be embodied in many different forms and should not be construed as being limited to embodiments set forth herein; rather, embodiments may be provided so that this disclosure will be thorough and complete, and will fully convey the concept to those skilled in the art.

A mobile terminal may be described below with reference to the accompanying drawings. In the following description, suffixes "module" and "unit" may be given to components of the mobile terminal in consideration of only facilitation of description and do not have meanings or functions discriminated from each other.

The mobile terminal may include a cellular phone, a smart phone, a laptop computer, a digital broadcasting terminal, personal digital assistants (PDA), a portable multimedia player (PMP), a navigation system and/or so on.

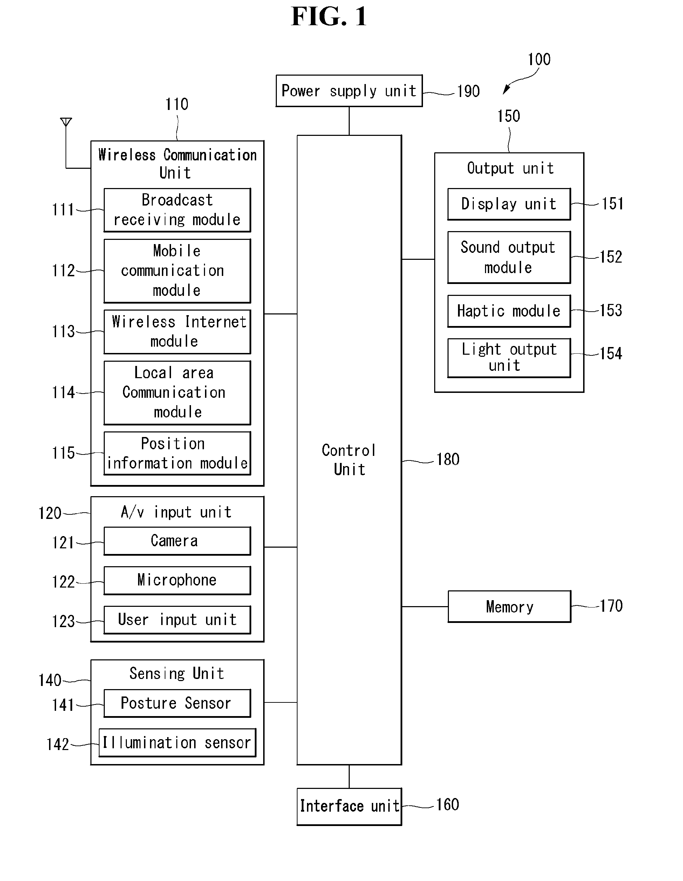

FIG. 1 is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply unit 190. The components shown in FIG. 1 may be essential parts and/or a number of components included in the mobile terminal 100 may vary. Components of the mobile terminal 100 may now be described.

The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display module 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply unit 190 supplies power and/or whether the interface 170 is connected to an external device. The sensing unit 140 may also include a proximity sensor. The sensing unit 140 may sense a motion of the mobile terminal 100.

The output unit 150 may generate visual, auditory and/or tactile output, and the output unit 150 may include the display module 151, an audio output module 152, an alarm 153 and a haptic module 154. The display module 151 may display information processed by the mobile terminal 100. The display module 151 may display a user interface (UI) and/or a graphic user interface (GUI) related to a telephone call when the mobile terminal 100 is in the call mode. The display module 151 may also display a captured and/or received image, a UI or a GUI when the mobile terminal 100 is in the video telephony mode or the photographing mode.

The display module 151 may include at least one of a liquid crystal display, a thin film transistor liquid crystal display, an organic light-emitting diode display, a flexible display and/or a three-dimensional display. The display module 151 may be of a transparent type or a light transmissive type. That is, the display module 151 may include a transparent display.

The transparent display may be a transparent liquid crystal display. A rear structure of the display module 151 may also be of a light transmissive type. Accordingly, a user may see an object located behind the body (of the mobile terminal 100) through the transparent area of the body of the mobile terminal 100 that is occupied by the display module 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display module 151 and a sensor sensing touch (hereafter referred to as a touch sensor) form a layered structure that is referred to as a touch screen, the display module 151 may be used as an input device in addition to an output device. The touch sensor may be in the form of a touch film, a touch sheet, and/or a touch pad, for example.

The touch sensor may convert a variation in pressure applied to a specific portion of the display module 151 or a variation in capacitance generated at a specific portion of the display module 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display module 151.

The proximity sensor (of the sensing unit 140) may be located in an internal region of the mobile terminal 100, surrounded by the touch screen, and/or near the touch screen. The proximity sensor may sense an object approaching a predetermined sensing face or an object located near the proximity sensor using an electromagnetic force or infrared rays without having mechanical contact. The proximity sensor may have a lifetime longer than a contact sensor and may thus have a wide application in the mobile terminal 100.

The proximity sensor may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display module 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply unit 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. Embodiments may be implemented by the controller 180.

According to software implementation, embodiments such as procedures or functions may be implemented with a separate software module that executes at least one function or operation. Software codes may be implemented according to a software application written in an appropriate software language. The software codes may be stored in the memory 160 and executed by the controller 180.

In what follows, a control method and embodiments related to the method which can be implemented in the mobile terminal 100 will be described with reference to appended drawings. It should be clearly understood by those skilled in the art that the present invention can be realized in a different, particular form as long as the present invention does not depart from the technical principles and essential features of the present invention.

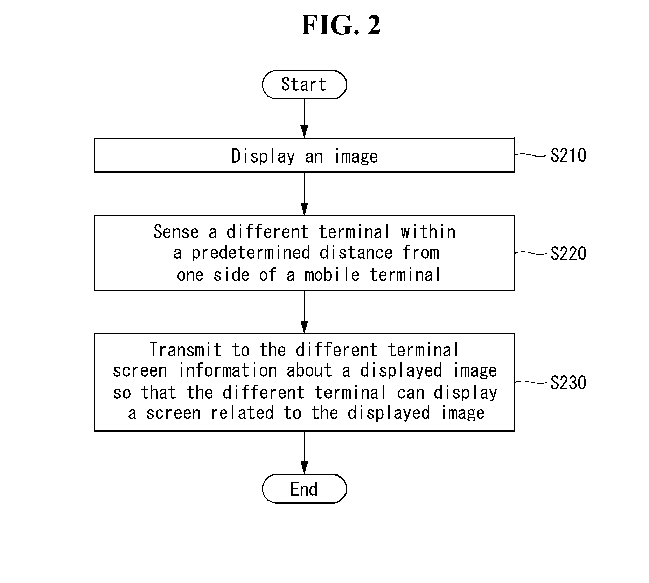

FIG. 2 is one example of a flow diagram illustrating a method for controlling a mobile terminal according to one embodiment of the present invention.

First, the mobile terminal 100 displays an image S210. In this case, the image can represent not only content related image such as video, photograph, and thumbnail but also any kind of image which can be visually recognized, such as text, UI screen, icon, and cursor.

Afterwards, the mobile terminal 100 senses a different terminal within a predetermined distance S220. More specifically, a sensing unit 140 is formed on one side of the mobile terminal 100, and a different terminal approaching the sensing unit 140 within the predetermined distance can be sensed by the sensing unit 140. Also, the sensing unit 140 can sense one side of a different terminal touching one side of the mobile terminal 100.

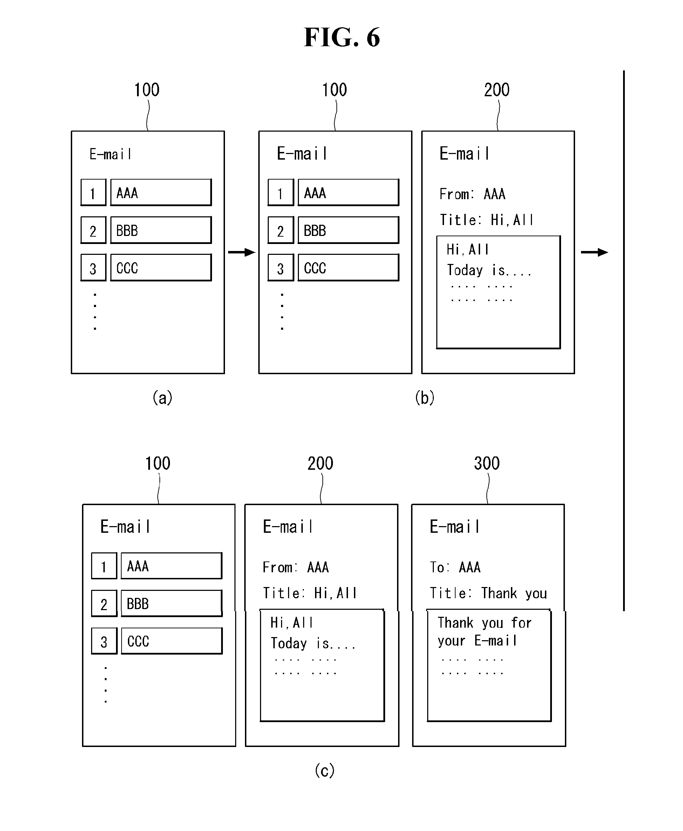

Afterwards, the mobile terminal 100 transmits screen information about a displayed image to the different terminal S230. More specifically, if the different terminal is sensed while the mobile terminal 100 is displaying an image, the controller 180 can transmit screen information about a displayed image to the different terminal through the wireless communication unit 110 so that a screen related to the displayed image can be displayed on the different terminal. Specific descriptions of the mobile terminal 100 and the different terminal related to the aforementioned operation will be given by FIGs. 6 to 18.

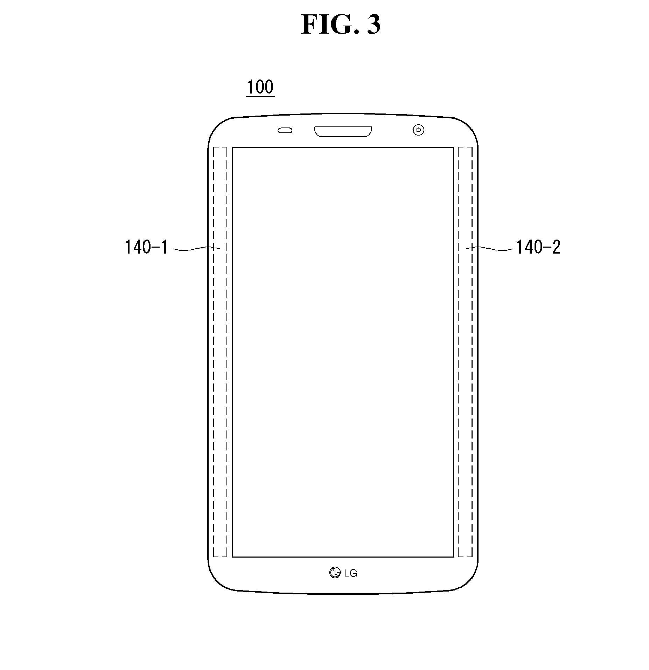

FIGs. 3 to 5 are various examples of a sensing unit 140 disposed according to one embodiment of the present invention.

With respect to FIG. 3, a sensing unit 140 is embedded in the mobile terminal 100, and the sensing unit 140 can comprise a first sensing unit 140-1 and a second sensing unit 140-2. The first sensing unit 140-1 can be disposed on one side of the mobile terminal 100, and the second sensing unit 140-2 can be disposed on the opposite side of the first sensing unit 140-1. In other words, the first 140-1 and the second sensing unit 140-2 can be formed on the left and the right side of the mobile terminal, respectively. Therefore, the first 140-1 and the second sensing unit 140-2 can sense different terminals located within a predetermined distance from the left and the right side of the mobile terminal 100.

Also, as shown in FIG. 3, the first 140-1 and the second sensing unit 140-2 can be formed in a longitudinal direction of each side of the mobile terminal 100. In this case, each of the first 140-1 and the second sensing unit 140-2 can sense location of a different terminal with respect to the mobile terminal 100. In other words, each of the first 140-1 and the second sensing unit 140-2 can not only sense a different terminal located within a predetermined distance but also sense whether the different terminal is located on a upper side, at the center, or on a lower side of the mobile terminal 100.

Also, as shown in FIG. 3, the first 140-1 and the second sensing unit 140-2 each can be implemented in the form of a gyro sensor. Therefore the first 140-1 and the second sensing unit 140-2 each can sense other terminals by sensing the motion of the mobile terminal 100 approaching to the other terminals.

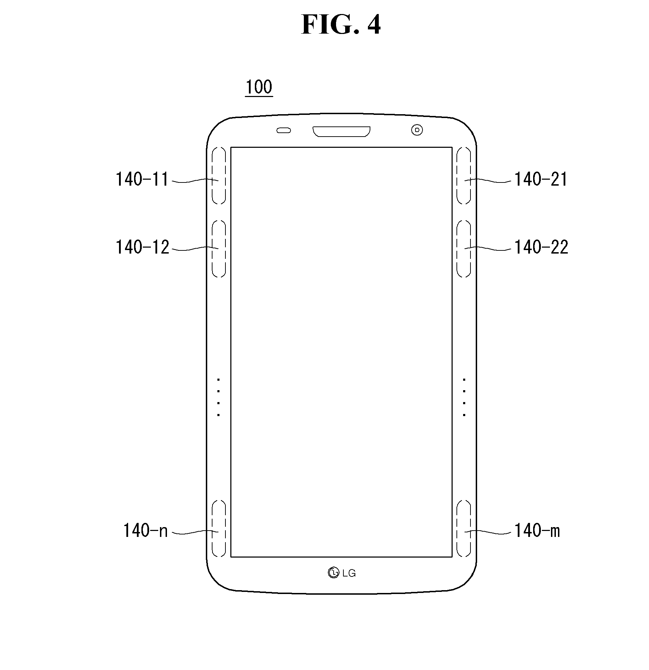

Meanwhile, although FIG. 3 assumes that the first 140-1 and the second sensing unit 140-2 are made up of a single sensor, the present invention is not limited to the above assumption, but the first 140-1 and the second sensing unit 140-2 can be formed by using a plurality of sensors. As shown in FIG. 4, the first sensing unit 140-1 can comprise a plurality of sensors 140-11 ∼ 140-11n disposed at predetermined spacing on the left side of the mobile terminal 100. Likewise, the second sensing unit 140-2 can comprise a plurality of sensors 140-21 ∼ 140-m disposed at predetermined spacing on the right side of the mobile terminal 100.

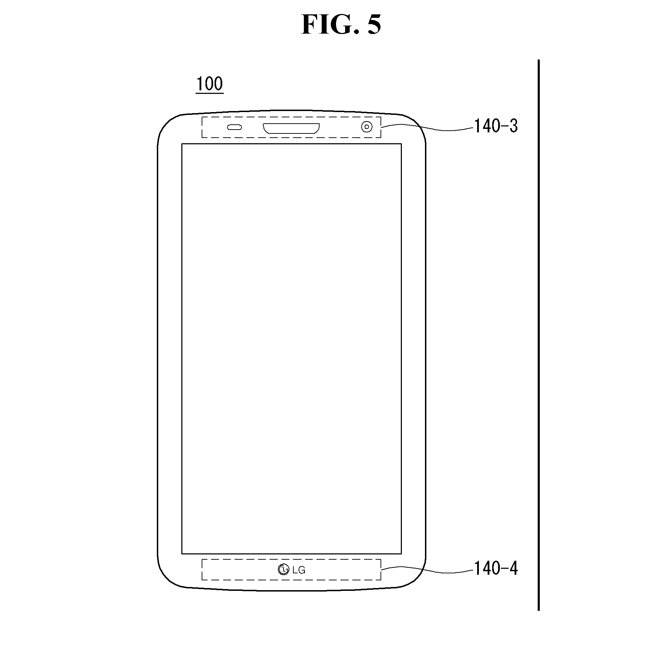

Meanwhile, with reference to FIG. 5, the sensing unit 140 can comprise a third sensing unit 140-3 and a fourth sensing unit 140-4. The third sensing unit 140-3 can be disposed on a upper side of the mobile terminal 100, and the fourth sensing unit 140-4 can be disposed on the opposite side of the third sensing unit 140-3. In other words, the third 140-3 and the fourth sensing unit 140-4 can be formed respectively on the upper side and the lower side of the mobile terminal 100. Therefore, each of the third 140-3 and the fourth sensing unit 140-4 can sense a different terminal located within a predetermined distance from the upper and the lower side of the mobile terminal 100.

Also, as shown in FIG. 5, the third 140-3 and the fourth sensing unit 140-4 can be formed in a longitudinal direction of each side of the mobile terminal 100. In this case, each of the third 140-3 and the fourth sensing unit 140-4 can sense location of a different terminal with respect to the mobile terminal 100. For example, the third sensing unit 140-3 can not only sense a different terminal located within a predetermined distance from the mobile terminal 100 but also sense whether the different terminal is located on a upper side, at the center, or on a lower side of the mobile terminal 100. Likewise, the fourth sensing unit 140-4 can also sense whether the different terminal is located on a upper side, at the center, or on a lower side of the mobile terminal 100.

Meanwhile, although FIGs. 3 to 5 assume that the sensing unit 140 is embedded inside the mobile terminal 100, the present invention is not limited to the aforementioned assumption. In other words, the sensing unit 140 can be exposed to the outside of the mobile terminal 100.

Also, descriptions of the sensing unit 140 are not limited on the embodiments of FIGs. 3 to 5. In other words, the sensing unit 140 can be disposed on any of the upper, lower, left, and right side of the mobile terminal 100.

Furthermore, specifics described with respect to the sensing unit 140 can also be applied to other different terminals.

FIGs. 6 to 13 are various example of an e-mail screen changed according to one embodiment of the present invention. In what follows, various embodiments where an e-mail screen is displayed on the display unit 151 of the mobile terminal 100 will be described.

The controller 180 can transmit information about previous screen or next screen of a current screen with respect to a different terminal 100 sensed by the sensing unit 140. More specifically, the controller 180 can transmit information about previous screen of a current screen with respect to a first different terminal 200 sensed by the first sensing unit 140-1 or information about next screen of the current screen with respect to a second different terminal 300 sensed by the second sensing unit 140-2.

With reference to FIG. 6(a), the display unit 151 of the mobile terminal 100 displays an email list. In other words, an email list received through a particular email account registered in the mobile terminal 100 is being displayed.

In a normal condition, the user touches an email from the received email list, initiating a screen change and displaying the content of the corresponding email. However, according to one embodiment of the present invention, as shown in FIG. 6(b), a first different terminal 200 may approach within a distance less than a predetermined range so that the sensing unit 140 disposed on the right side of the mobile terminal 100 can sense the approach. If the sensing unit 140 senses the first different terminal 200, the controller 180 can transmit email information related to one of the email list displayed on the display unit of the mobile terminal 100 to the first different terminal 200 sensed. At this time, the email information may correspond to a recipient, sender, title, message, attached file, and time of the received, particular email. Therefore, the first different terminal 200 can display the content of an email from the received email list while the display unit 151 of the mobile terminal 100 can continuously display the received email list.

Meanwhile, the controller 180 can transmit information of an email located at the top of the email list displayed on the display unit 151 to the first different terminal 200. Therefore, as shown in FIG. 6(b), the first different terminal 200 sensed by the sensing unit 140 can display the content of the email located at the top of the email list displayed on the display unit 151. In this case, the email located at the top of the email list may correspond to the email received most recently.

Meanwhile, the controller 180 can transmit to the first different terminal 200 information of an email, reception of which has not been confirmed or the content of which has not been read from among the email list displayed on the display unit 151 of the mobile terminal 100. Therefore, the first different terminal 200 can receive information of an email located at the top of at least one email, reception of which has not been made or the content of which has not been read, or information of an email received most recently; and display the content of the information.

On the other hand, the controller 180 can transmit information about an email selected by the user from among the email list displayed on the display unit 151 to the first different terminal 200. For example, if the user touches one from among the email list displayed on the display unit 151 of the mobile terminal 100, the first different terminal 200 can display the content of the selected email.

Under the setting of FIG. 6(b), a second different terminal 300 can approach the right side of the first different terminal 200, the situation of which is illustrated in FIG. 6(c). In this case, the sensing unit 140 can sense the second different terminal 300 which has approached the opposite side of one side of the sensed, first different terminal 200 within a distance of a predetermined range. With reference to FIG. 6(c), one side of the first different terminal 200 is located within a predetermined distance of the mobile terminal 100 while the other side of the first different terminal 200 is located within a predetermined distance of the second different terminal 300. In this case, the controller 180 can control the sensed, second different terminal 300 to display a response screen with respect to the content of an email displayed on the first different terminal 200. Therefore, the user can write an email in response to the content of the email displayed on the second different terminal 300 by using the response screen displayed on the second different terminal 300.

In this way, the present invention enables the user to figure out the email list and the email content at the same time, thereby improving user intuitiveness. Also, the present invention improves user convenience since movement between pages within the same terminal is minimized.

Meanwhile, if the different terminal 200 is sensed by the sensing unit 140, the controller 180 can transmit menu information meant for editing an image displayed on the display unit 151 to the different terminal 200. In this case, if one of the menu displayed on the different terminal 200 is selected, the controller 180 can display an editing screen corresponding to the selected menu on the display unit 151. In what follows, the same description as provided above will be omitted.

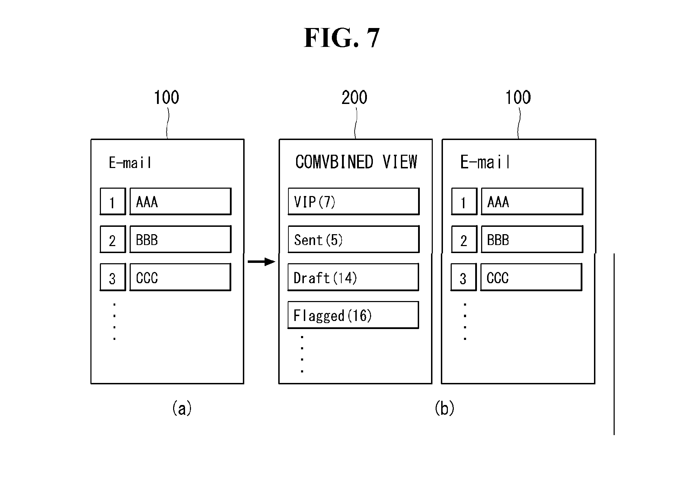

With reference to FIG. 7(a), the display unit 151 of the mobile terminal 100 displays an email list. Afterwards, as shown in FIG. 7(b), a different terminal 200 may approach within a distance less than a predetermined range so that the sensing unit 140 disposed on the left side of the mobile terminal 100 can sense the approach. If the sensing unit 140 senses the different terminal 200, the controller 180 can transmit menu meant for editing the email list displayed on the display unit 151 to the sensed, different terminal 200. At this time, the menu may comprise various functions such as deletion, high priority marking, and reply with respect to one of the emails listed. Therefore, the different terminal 200 can display a menu meant for editing a received email list, and the email list displayed on the display unit 151 of the mobile terminal 100 can be changed in response to the menu item selected by the user from among the menu displayed on the different terminal 200.

In this way, the present invention enables the user to figure out the email list and the menu related to the email list at the same time, thereby improving user intuitiveness. Also, the present invention improves user convenience since movement between pages within the same terminal is minimized.

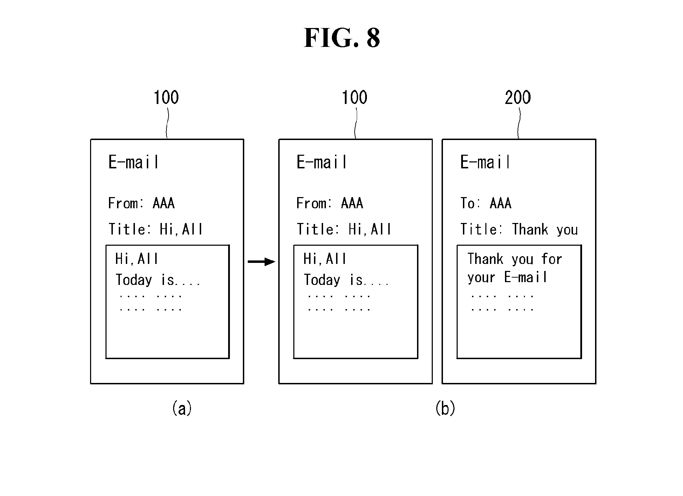

With reference to FIG. 8(a), the display unit 151 of the mobile terminal 100 displays content of an email. Afterwards, as shown in FIG. 8(b), a different terminal 200 may approach within a distance less than a predetermined range so that the sensing unit 140 disposed on the right side of the mobile terminal 100 can sense the approach. If the sensing unit 140 senses the different terminal 200, the controller 180 can transmit information of a reply screen meant for replying to the content of an email displayed on the display unit 151 of the mobile terminal 100 to the sensed, different terminal 200. Therefore, the different terminal 200 can display a reply menu for the content of an email displayed on the display unit 151 of the mobile terminal 100, and the user can carry out an email reply with respect to the different terminal 200.

In this way, the present invention enables the user to figure out the content of an email and a reply to the email content at the same time, thereby improving user intuitiveness. Also, the present invention improves user convenience since movement between pages within the same terminal is minimized.

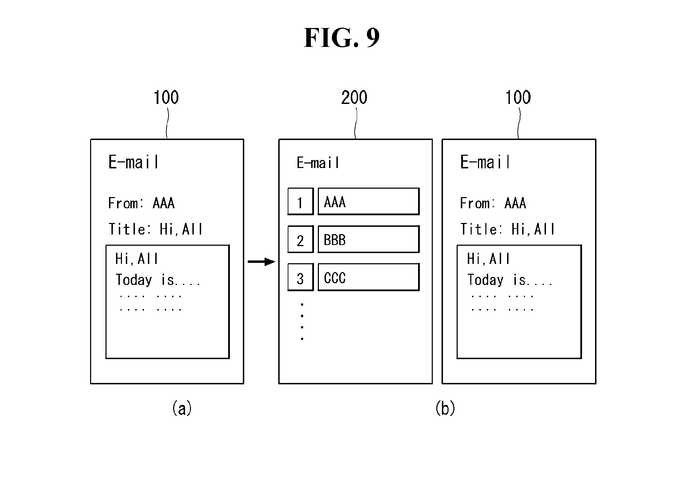

With reference to FIG. 9(a), the display unit 151 of the mobile terminal 100 displays content of an email. Afterwards, as shown in FIG. 9(b), a different terminal 200 may approach within a distance less than a predetermined range so that the sensing unit 140 disposed on the left side of the mobile terminal 100 can sense the approach. If the sensing unit 140 senses the different terminal 200, the controller 180 can control so that the different terminal 200 can display an email list which forms a previous screen of the content of an email displayed on the display unit 151 of the mobile terminal 100. Therefore, if an email from among the email list displayed on the different terminal 200 is selected, the controller 180 can control the display unit 151 to display the content of the selected email.

In this way, the present invention enables the user to figure out the email list and content thereof at the same time, thereby improving user intuitiveness. Also, the present invention improves user convenience since movement between pages within the same terminal is minimized.

Meanwhile, if the different terminal 200 is displaced sequentially from one part to the other part of the sensing unit 140, the controller can transform either of the display unit 151 and the different terminal 200 to a predetermined display mode

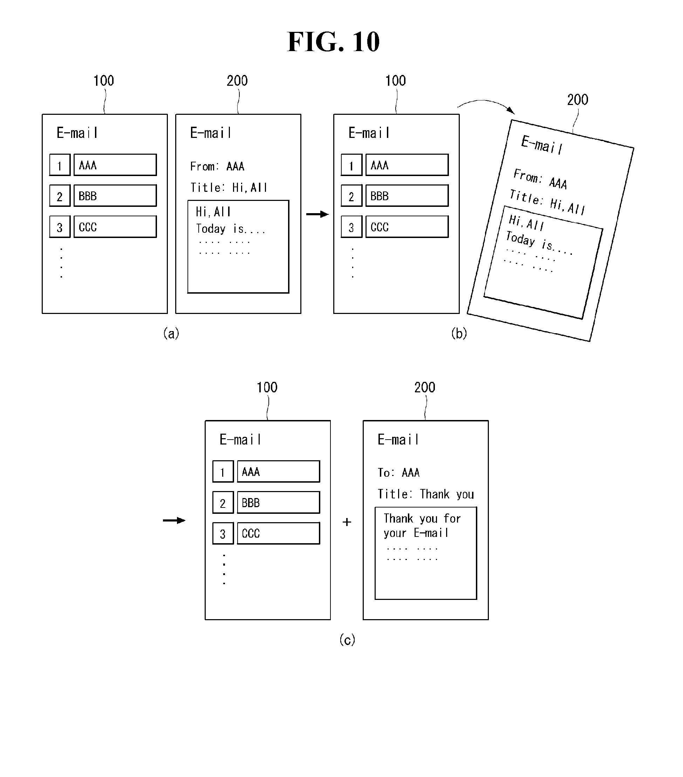

With reference to FIG. 10(a), the display unit 151 of the mobile terminal 100 displays an email list, and a different terminal 200 located within a predetermined distance from the mobile terminal 100 displays the content of one email from among the email list. Afterwards, the upper part to the lower part of one side of the mobile terminal 100 adjacent to the different terminal 200 can be displaced sequentially, the operation of which is shown in FIGs. 10(b) and 10(c). At this time, what is called "displaced" can mean that one side of the mobile terminal and one side of the different terminal 200 located within a predetermined distance from each other can be located beyond the predetermined distance. In other words, the sensing unit 140 of the mobile terminal 100 is made to be incapable of sensing the displaced different terminal 200. As a result, as shown in FIG. 10(c), the display unit 151 of the mobile terminal 100 can continuously display the email list, and the different terminal 200 can display a reply screen with respect to the content of the email which has been displayed before the displacement.

Due to the operation described above, the user can easily reply to an email.

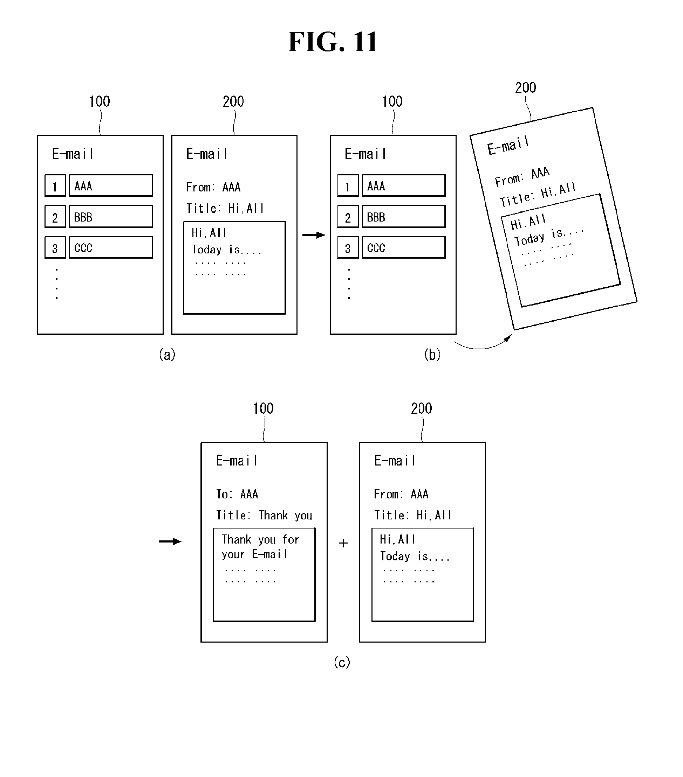

With reference to FIG. 11(a), the display unit 151 of the mobile terminal 100 displays an email list, and a different terminal 200 located within a predetermined distance from the mobile terminal 100 displays the content of one email from among the email list. Afterwards, the upper part to the lower part of one side of the mobile terminal 100 adjacent to the different terminal 200 can be displaced sequentially, the operation of which is shown in FIGs. 11(b) and 11(c). At this time, what is called "displaced" means the same as described above. As a result, as shown in FIG. 11(c), the different terminal 200 can continuously display the content of an email, and the mobile terminal 100 can display a reply screen with respect to the content of the email displayed on the different terminal 200.

Due to the operation described above, the user can easily reply to an email.

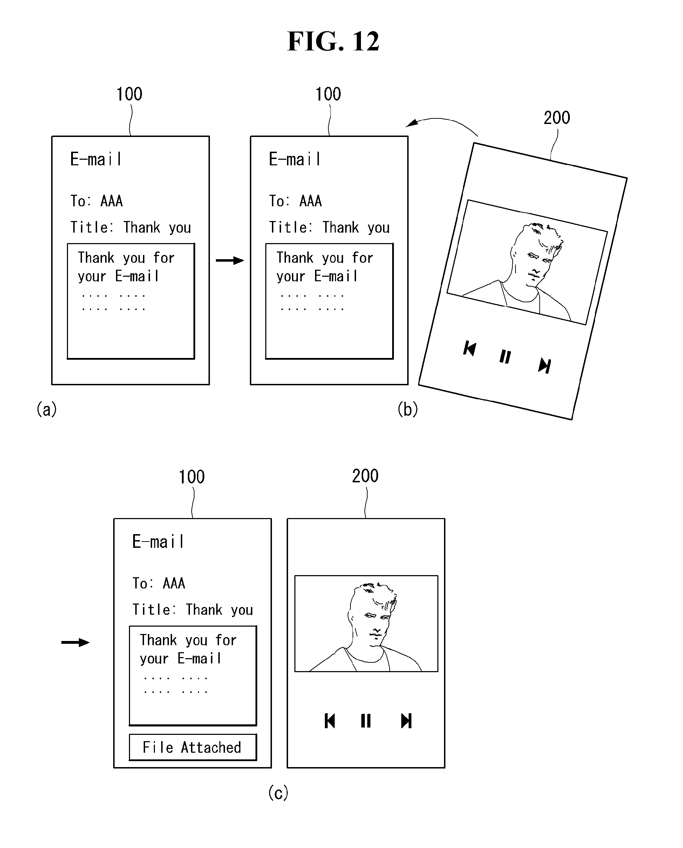

With reference to FIG. 12(a), the display unit 151 of the mobile terminal 100 can display an email reply screen, and the user can enter the reply content through the user input unit 123. And the different terminal 200 displaced from the mobile terminal 100 can execute a particular file. At this time, the file can refer to a file of any type such as a still image, video, text, and program which can be executed in the mobile terminal 100 or in the different terminal 200.

Afterwards, the different terminal 200 can approach the upper part to the lower part of one side of the mobile terminal 100, the operation of which is illustrated in FIGs. 12(b) and 12(c). At this time, what is called "approached" can mean that one side of the mobile terminal 100 and one side of the different terminal 200 are located within a predetermined distance from each other. As a result, as shown in FIG. 12(c), the different terminal 200 can continuously execute a particular file, and the mobile terminal 100 can attach the particular file executed in the different terminal 200 to an email reply. In this case, an object indicating that a file has been attached can be formed on the display unit 151 of the mobile terminal 100.

Due to the operation described above, the user can easily attach a file while making an email reply.

Meanwhile, the controller 180 can transmit to the different terminal 200 information about one email corresponding to the location of the sensed, different terminal 200 from among the displayed email list.

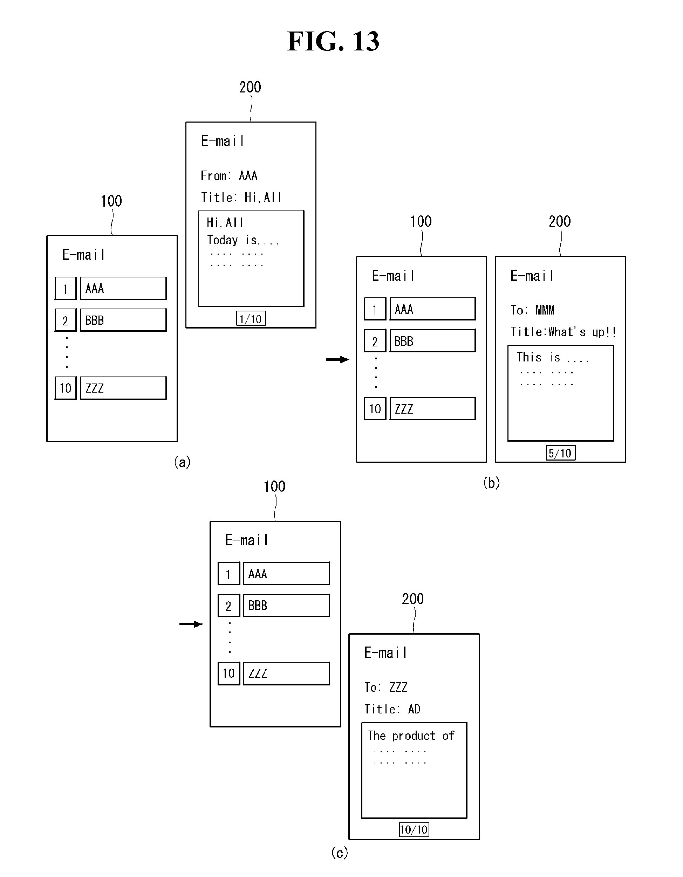

With reference to FIG. 13(a), the display unit 151 of the mobile terminal 100 displays an email list, and a different terminal 200 located within a predetermined distance from the mobile terminal 100 displays the content of one email from among the email list. At this time, a lower part of one side of the different terminal 200 can be sensed by the sensing unit 140, which is illustrated in FIG. 13(a). In this case, the controller 180 can transmit information of the email located at the top of the displayed email list to the different terminal 200. Therefore, the different terminal 200 can display the content of a first email from among the email list.

Afterwards, while one side of the different terminal 200 is being sensed by the sensing unit 140, the one side of the different terminal 200 can change its location sensed by the sensing unit 140. In other words, the different terminal 200 can move toward a lower part of the sensing unit 140, which is illustrated in FIGs. 13(a) and (b). In this case, the controller 180 can transmit to the different terminal 200 information about one email corresponding to the location of the different terminal 200 sensed by the sensing unit 140 from among the displayed email list. Therefore, according to FIG. 13(b) which shows a situation where the whole of one side of the different terminal 200 is sensed by the sensing unit 140, the controller 180 can transmit information about an email located in an intermediate location among the email list to the different terminal 200, and the different terminal 200 can display the content of the email in the intermediate location.

Afterwards, the different terminal 200 can move toward a lower part of the sensing unit 140, which is illustrated in FIGs. 13(b) and (c). Therefore, the upper part of one side of the different terminal 200 can be sensed by the sensing unit 140, which is illustrated in FIG. 13(c). In this case, the controller 180 can transmit to the different terminal 200 information about an email located at the bottom of the displayed email list. Therefore, the different terminal 200 can display the content of the last email from among the email list.

In this way, the present invention enables the user to figure out the email list and content thereof at the same time, thereby improving user intuitiveness. Also, the present invention improves user convenience since movement between pages within the same terminal is minimized.

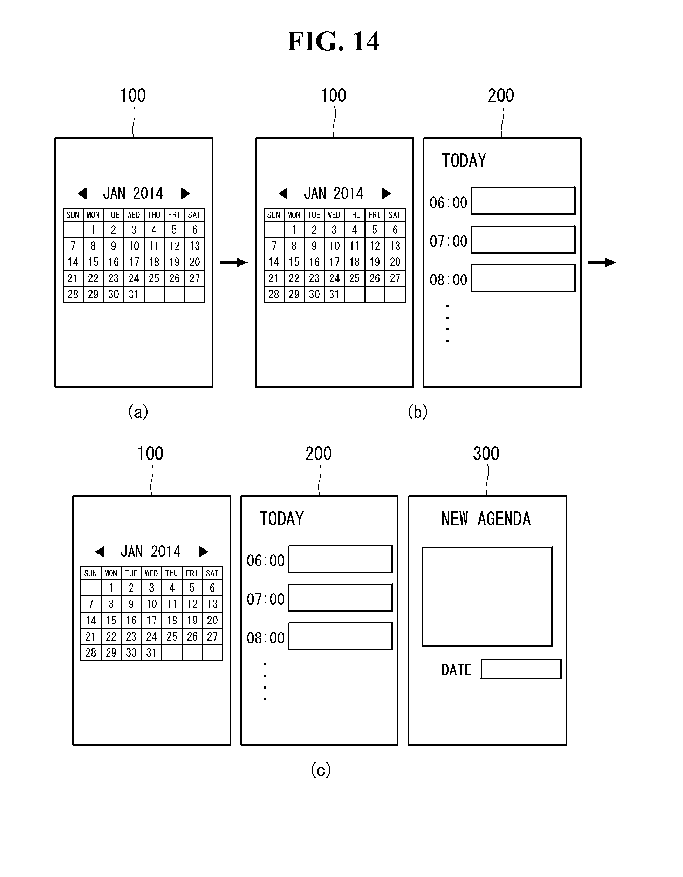

FIGs. 14 to 15 are various examples of a calendar screen changed according to one embodiment of the present invention. In what follows, various embodiments where a calendar screen is displayed on the display unit 151 of the mobile terminal 100 will be described.

First, if another different terminal located within a predetermined distance from a different terminal 200 is sensed sequentially by the different terminal 200 and a first sensing unit 140-1, the controller 180 can transmit information about an input screen meant for entering new information with respect to one of the mobile terminal 100 and the different terminal 200 to the another different terminal.

The display unit of the mobile terminal 100 can display a calendar, and as shown in FIG. 14(a), the display unit 151 can display a calendar of a particular date. In this case, the controller 180 can control so that the calendar corresponding to a currently time can be displayed and the date corresponding to the current time can be displayed in various forms of objects.

Afterwards, as shown in FIG. 14(b), a first different terminal 200 can approach within a distance less than a predetermined range so that the sensing unit 140 disposed on the right side of the mobile terminal 100 can sense the approach. If the sensing unit 140 senses the first different terminal 200, the controller 180 can transmit to the sensed, first different terminal 200 information about one of the dates of a calendar displayed on the display unit 151 of the mobile terminal 100. At this time, the date information can refer to year, month, and day of the corresponding date, hourly schedules, and the content of the schedules. Therefore, the first different terminal 200 can display a schedule list about the year, month, and day of the current time, which is illustrated in FIG. 14(b).

Meanwhile, the control operation as described in FIG. 13 can be applied the same to the calendar screen. In other words, given that a first different terminal 200 is located as shown in FIG. 13 with respect to the mobile terminal 100, the controller 180 can transmit date information corresponding to a first date of the displayed calendar to the first different terminal 200, and the first different terminal 200 can display a schedule list of the corresponding date. Afterwards, if the first different terminal 200 is located as shown in FIG. 13(b) with respect to the mobile terminal 100, the controller can transmit date information corresponding to an intermediate date of the displayed calendar to the first different terminal 200, and the first different terminal 200 can display a schedule list of the corresponding date. Similarly, if the first different terminal 200 is located as shown in FIG. 13(c) with respect to the mobile terminal 100, the controller can transmit date information corresponding to the last date of the displayed calendar to the first different terminal 200, and the first different terminal 200 can display a schedule list of the corresponding date. In this case, the date corresponding to the schedule of the first different terminal 200 can be displayed in various forms of objects on the calendar displayed on the display unit 151 of the mobile terminal 100.

Meanwhile, the controller 180 can transmit to the first different terminal 200 information about the date selected by the user from among the calendar displayed on the display unit 151 of the mobile terminal 100. For example, if one date different from a current date is selected from among the calendar displayed on the display unit 151 of the mobile terminal 100, the first different terminal 200 can display a schedule list of the selected date. The user can check the schedule of the selected date through the first different terminal 200.

Under the setting of FIG. 14(b), a second different terminal 300 can approach the right side of the first different terminal 200, the situation of which is illustrated in FIG. 14(c). In this case, the sensing unit 140 can sense the second different terminal 300 which has approached the opposite side of one side of the sensed, first different terminal 200 within a distance of a predetermined range. With reference to FIG. 14(c), one side of the first different terminal 200 is located within a predetermined distance of the mobile terminal 100 while the other side of the first different terminal 200 is located within a predetermined distance of the second different terminal 300. In this case, the controller 180 can control the sensed, second different terminal 300 to display a schedule input screen with respect to the schedule input screen displayed on the first different terminal 200. Therefore, the user can set up a schedule by entering the schedule through the schedule input screen displayed on the second different screen and storing the entered schedule. Although the term of schedule input screen is employed for this situation, the same term can also be used to indicate not only a screen for entering a new schedule but also a screen for changing a schedule already entered and stored.

In this way, the present invention enables the user to figure out the schedule list easily, thereby improving user intuitiveness. Also, the present invention improves user convenience since movement between pages due to entering or editing a schedule within the same terminal is minimized.

Meanwhile, if the different terminal 200 is sensed by the sensing unit 140, the controller 180 can transmit menu information meant for editing an image displayed on the display unit 151 to the different terminal 200. In this case, if one of the menu displayed on the different terminal 200 is selected, the controller 180 can display an editing screen corresponding to the selected menu on the display unit 151. In what follows, the same description as provided above will be omitted.

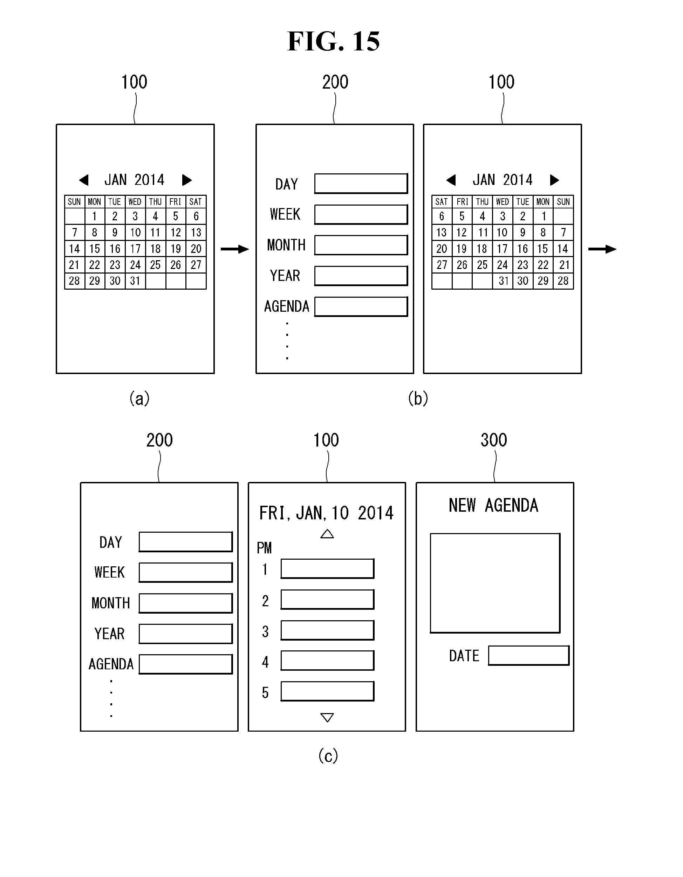

With reference to FIG. 15(a), the display unit 151 of the mobile terminal 100 displays a calendar. In what follows, the same description as provided above will be omitted.

Afterwards, as shown in FIG. 15(b), a first different terminal 200 may approach within a distance less than a predetermined range so that the sensing unit 140 disposed on the left side of the mobile terminal 100 can sense the approach. If the sensing unit 140 senses the different terminal 200, the controller 180 can transmit a menu meant for searching the calendar displayed on the display unit 151 of the mobile terminal 100 for a particular date or searching for or editing a schedule of the particular date to the sensed, different terminal 200. Therefore, the different terminal 200 can display a menu.

In what follows, it is assumed that under the setting of FIG. 15(b), the use carries out an operation to search for a schedule of a particular date in the first different terminal 200. In this case, the display unit 151 of the mobile terminal 100 can display a schedule list discovered with respect to the particular date.

Afterwards, a second different terminal 300 can approach the right side of the mobile terminal 100, which is illustrated in FIG. 15(c). With reference to FIG. 15(c), one side and the other side of the mobile terminal 100 are located within a predetermined distance from one side of the first different terminal 200 and one side of the second different terminal 300, respectively. In this case, the controller 180 can control the sensed, second different terminal 300 to display a schedule input screen with respect to a schedule list displayed on the mobile terminal 100. Therefore, a schedule can be set up as the user enters and stores the schedule through the schedule input screen displayed on the second different terminal 300.

In this way, the present invention enables the user to figure out the schedule list easily, thereby improving user intuitiveness. Also, the present invention improves user convenience since movement between pages due to entering or editing a schedule within the same terminal is minimized.

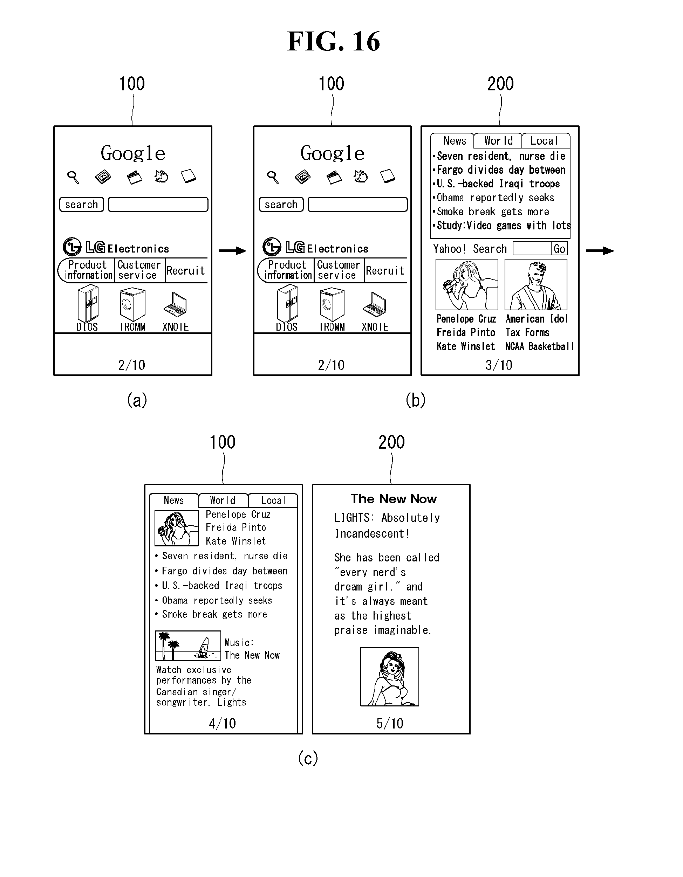

FIGs. 16 to 18 are various examples of a web screen changed according to one embodiment of the present invention. In what follows, various embodiments where a web screen is displayed on the display unit 151 of the mobile terminal 100 will be described.

With reference to FIG. 16(a), a web screen is displayed on the display unit 151 of the mobile terminal 100. In this case, the controller 180 can control the web screen so that depth of the displayed web screen can be displayed on one side of the web screen.

Afterwards, as shown in FIG. 16(b), a different terminal 200 may approach within a distance less than a predetermined range so that the sensing unit 140 disposed on the left side of the mobile terminal 100 can sense the approach. If the sensing unit 140 senses the different terminal 200, the controller 180 can transmit information of a web screen displayed on the display unit 151 of the mobile terminal 100 to the different terminal 200. Here, the information of a web screen can include a previous web screen and next web screen with respect to the corresponding web screen. Therefore, the different terminal 200 can display a web screen subsequent to the web screen displayed on the mobile terminal 100, which is illustrated in FIG. 16(b). Therefore, the user can see a current web screen from the mobile terminal 100 while the user can see the web screen next to the current web screen from the different terminal 200.

Afterwards, the user can enter a user command for web screen change into the mobile terminal 100. In this case, the controller 180 performs web screen change according to the received user command twice and at the same time, transmits the information of the web screen changed twice to the different terminal 200. Therefore, under the setting of FIG. 16(b), if the user swipes from left side to right side on the display unit 151 of the mobile terminal 100, the controller 180 performs the corresponding swiping operation twice, and the different terminal 200 can display a web screen after the web screen of the mobile terminal 100 changed twice.

In the same way, the user can enter a user command for web screen change into the different terminal 200. In this case, the different terminal 200 performs web screen change according to the received user command twice and at the same time, transmits the information of the web screen changed twice to the mobile terminal 100. The controller 180 receives information of a web screen of the different terminal 200 changed twice, and the result of the aforementioned operation is the same as described above.

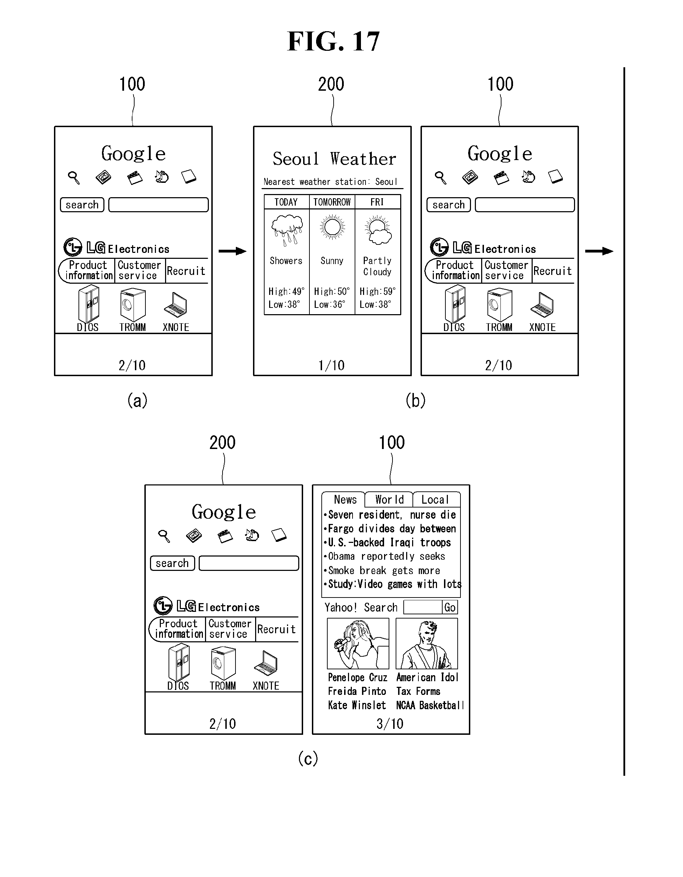

With reference to FIG. 17(a), a web screen is displayed on the display unit 151 of the mobile terminal 100. In what follows, the same description as provided above will be omitted.

As shown in FIG. 17(b), a different terminal 200 may approach within a distance less than a predetermined range so that the sensing unit 140 disposed on the left side of the mobile terminal 100 can sense the approach. If the sensing unit 140 senses the different terminal 200, the controller 180 can transmit information of a web screen displayed on the display unit 151 of the mobile terminal 100 to the different terminal 200. Therefore, the different terminal 200 can display a web screen before the web screen displayed on the mobile terminal 100, which is illustrated in FIG. 17(b). Therefore, the user can see a current web screen from the mobile terminal 100 while the user can see the web screen before the current web screen from the different terminal 200.

Afterwards, the user can enter a user command for web screen change into the mobile terminal 100. In this case, the controller 180 performs the web screen change according to the received user command once and at the same time, transmits information of the web screen changed once to the different terminal 200. Therefore, under the setting of FIG. 17(b), if the user swipes from right side to left side on the display unit 151 of the mobile terminal 100, the controller 180 performs the corresponding swiping operation once, and the different terminal 200 can display a web screen before the web screen of the mobile terminal 100 changed once.

In the same way, the user can enter a user command for web screen change into the different terminal 200. In this case, the different terminal 200 performs web screen change according to the received user command once and at the same time, transmits the information of the web screen changed once to the mobile terminal 100. The controller 180 receives information of a web screen of the different terminal 200 changed once, and the result of the aforementioned operation is the same as described above.

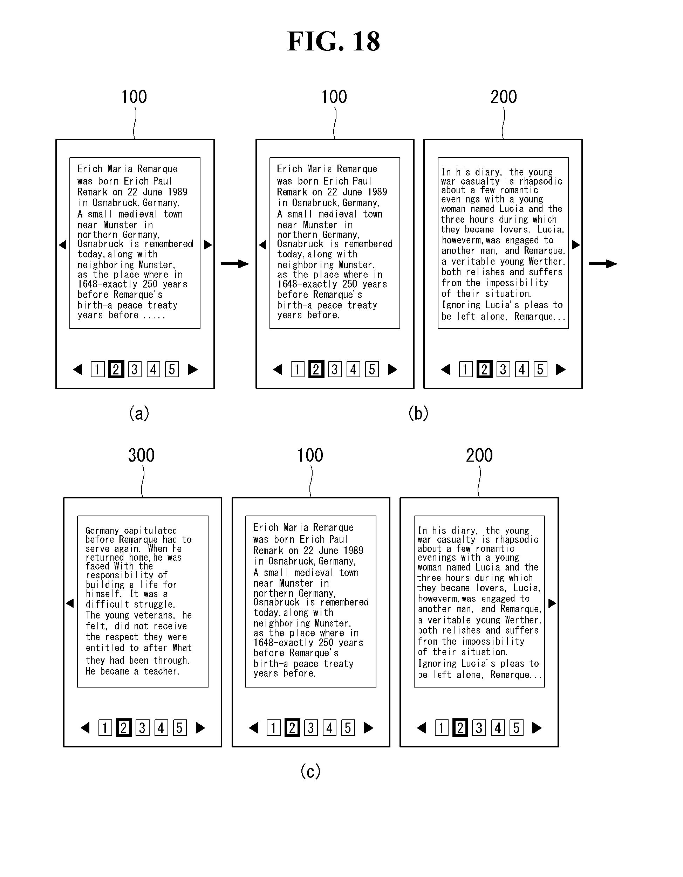

With reference to FIG. 18(a), a text screen is displayed on the display unit 151 of the mobile terminal 100. In this case, the controller 180 can control the display unit 151 so that the page of the displayed text screen can be displayed on one side of the screen.

Afterwards, as shown in FIG. 18(b), a first different terminal 200 may approach within a distance less than a predetermined range so that the sensing unit 140 disposed on the right side of the mobile terminal 100 can sense the approach. If the sensing unit 140 senses the first different terminal 200, the controller 180 can transmit information of a text screen displayed on the display unit 151 of the mobile terminal 100 to the first different terminal 200. Here, the information of a text screen can include page information and the content of the whole text with respect to the corresponding text screen. Therefore, the first different terminal 200 can display a text screen subsequent to the text screen displayed on the mobile terminal 100. In this case, the text screen displayed on the mobile terminal 100 and the text screen displayed on the first different screen 200 can belong to the same page and can be interrelated to each other. In other words, without scrolling up and down the text through the mobile terminal 100, the user can approach the first different terminal 200 so that the user can see the text linked to the text displayed on the mobile terminal 100 through the first different terminal 200, which is illustrated in FIG. 18(b).

Afterwards, as shown in FIG. 18(c), a second different terminal 300 may approach within a distance less than a predetermined range so that the sensing unit 140 disposed on the left side of the mobile terminal 100 can sense the approach. If the sensing unit 140 senses the second different terminal 300, the controller 180 can transmit information of a text screen displayed on the display unit 151 of the mobile terminal 100 to the second different terminal 300. Therefore, the second different terminal 300 can display a text screen before the text screen displayed on the mobile terminal 100. In this case, the text screen displayed on the mobile terminal 100 and the text screen displayed on the second different screen 300 can belong to the same page and can be interrelated to each other. In other words, without scrolling up and down the text through the mobile terminal 100, the user can approach the second different terminal 300 so that the user can see the text linked to the text displayed on the mobile terminal 100 through the second different terminal 300, which is illustrated in FIG. 18(c).

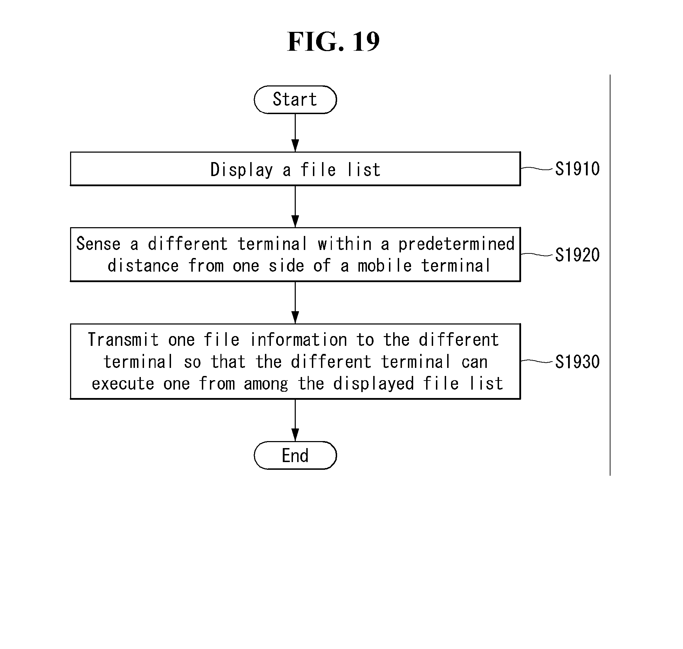

FIG. 19 is one example of a flow diagram illustrating a method for controlling a mobile terminal 100 according to another embodiment of the present invention.

First, the mobile terminal 100 displays a file list S1910. In this case, the file list can denote a plurality of files arranged and displayed. A file can refer to any type of file such as a still image, video, text, and program which can be executed in the mobile terminal 100 or in the different terminal 200.

Afterwards, the mobile terminal 100 senses a different terminal 200 within a predetermined distance S1920. More specifically, the sensing unit 140 is formed on one side of the mobile terminal 100, and the different terminal 200 approaching within a predetermined distance from the sensing unit 140 can be sensed by the sensing unit 140. Also, the sensing unit 140 can sense one side of the different terminal 200 touching one side of the mobile terminal 100.

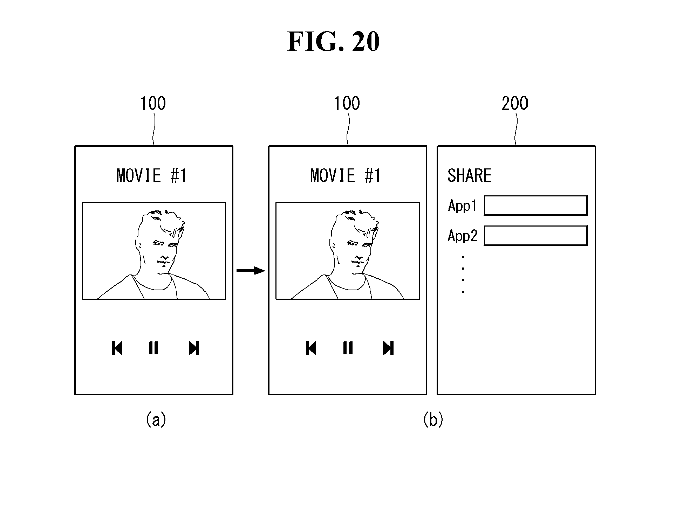

Afterwards, the mobile terminal 100 transmits file information about one from among the file list displayed on the mobile terminal 100 to the different terminal 200. More specifically, if the different terminal 200 is detected while the mobile terminal 100 is displaying the file list, the controller 180 can transmit file information about one file from among the displayed file list to the different terminal 200 through the wireless communication unit 110. In this case, the different terminal 200 can execute the file by using the received file information. Specific operations of the mobile terminal 100 and the different terminal 200 related to the aforementioned operation will be described in detail with reference to FIGs. 20 to 27.

FIGs. 20 to 27 are various example of a content screen changed according to another embodiment of the present invention. In what follows, various embodiments where the mobile terminal 100 executes content will be described.

With reference to FIG. 20(a), the mobile terminal 100 executes a video file. Descriptions below are not limited to video, but can be applied the same to various types of files such as still images and text files.

Afterwards, as shown in FIG. 20(b), a different terminal 200 may approach within a distance less than a predetermined range so that the sensing unit 140 disposed on the right side of the mobile terminal 100 can sense the approach. If the sensing unit 140 senses the different terminal 200, the controller 180 can transmit information of a file executed in the mobile terminal 100 to the different terminal 200. Therefore, the different terminal 200 can display a screen for sharing a file executed in the mobile terminal 100, which is illustrated in FIG. 20(b).

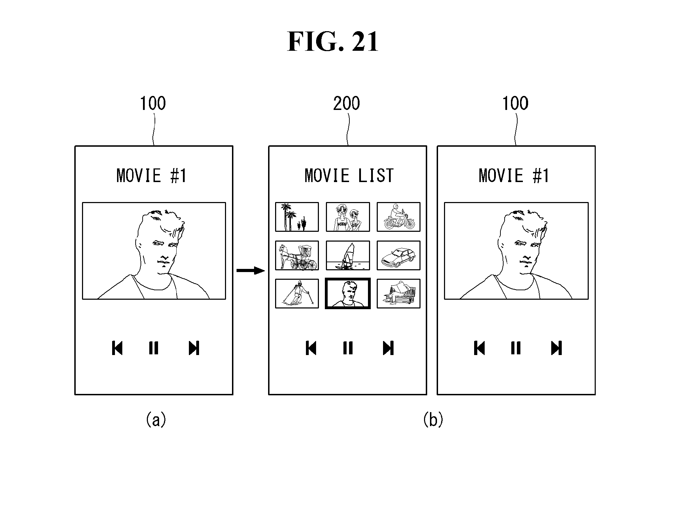

With reference to FIG. 21(a), the mobile terminal 100 executes a video file.

Afterwards, as shown in FIG. 21(b), a different terminal 200 may approach within a distance less than a predetermined range so that the sensing unit 140 disposed on the left side of the mobile terminal 100 can sense the approach. If the sensing unit 140 senses the different terminal 200, the controller 180 can transmit information of a file list including the file executed in the mobile terminal 100 to the different terminal 200. Therefore, the different terminal 200 can display a file list including the file executed in the mobile terminal 100, which is illustrated in FIG. 21(b). In this case, thumbnails corresponding to the files executed in the mobile terminal 100 can be displayed in various forms of objects in the list screen.

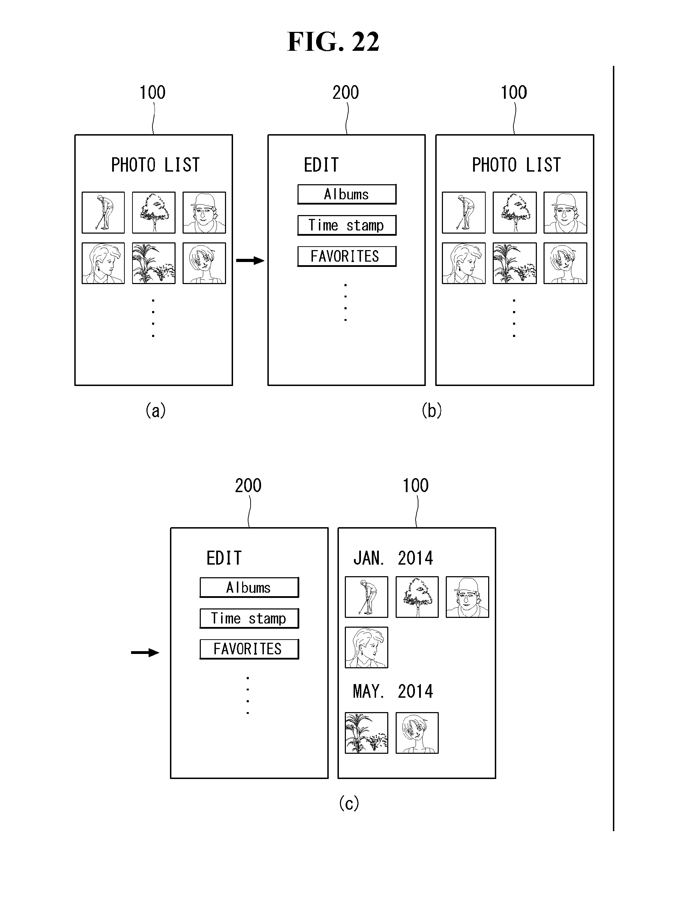

With reference to FIG. 22(a), the display unit 151 of the mobile terminal 100 displays a file list.

Afterwards, as shown in FIG. 22(b), a different terminal 200 may approach within a distance less than a predetermined range so that the sensing unit 140 disposed on the left side of the mobile terminal 100 can sense the approach. If the sensing unit 140 senses the different terminal 200, the controller 180 can transmit screen information for editing a file displayed on the mobile terminal 100 to the different terminal 200. Therefore, the different terminal 200 can display an editing screen as shown in FIG. 22(c). Afterwards, if the user selects one of editing objects displayed on the different terminal 200, the file list of the mobile terminal 100 can be edited according to the selected object.

Meanwhile, if one file is selected from the displayed file list according to a predetermined method, the controller 180 can transmit file information about the selected file to the different terminal 200. In this case, the predetermined method can be a touch input with respect to the one file of the displayed file list. Also, the controller 180 can transmit information of a file at the top of the displayed file list to the sensed, different terminal 200.

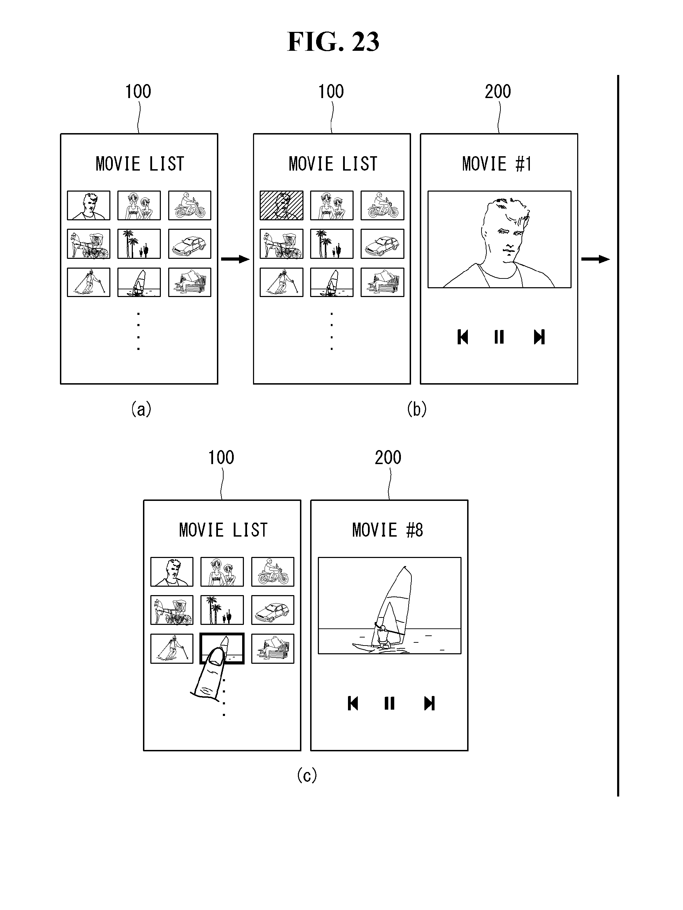

With reference to FIG. 23(a), the display unit 151 of the mobile terminal 100 displays a file list.

Afterwards, as shown in FIG. 23(b), a different terminal 200 may approach within a distance less than a predetermined range so that the sensing unit 140 disposed on the right side of the mobile terminal 100 can sense the approach. If the sensing unit 140 senses the different terminal 200, the controller 180 can transmit information about one file from the file list displayed on the mobile terminal 100 to the different terminal 200. In this case, the controller 180 can transmit information about the file at the top of the file list displayed on the mobile terminal 100 to the different terminal 200. Therefore, the different terminal 200 can execute the corresponding file by using the received file information, which is illustrated in FIG. 23(b).

Also, the user can select one file from the file list displayed on the mobile terminal 100. In this case, the controller 180 can transmit information about the selected file to the different terminal 200. Therefore, the different terminal 200 can automatically execute the file selected from the mobile terminal 100, which is illustrated in FIG. 23(c).

Meanwhile, the controller can transmit file information about one file from the displayed file list corresponding to the location at which the different terminal 200 has been sensed to the different terminal 200.

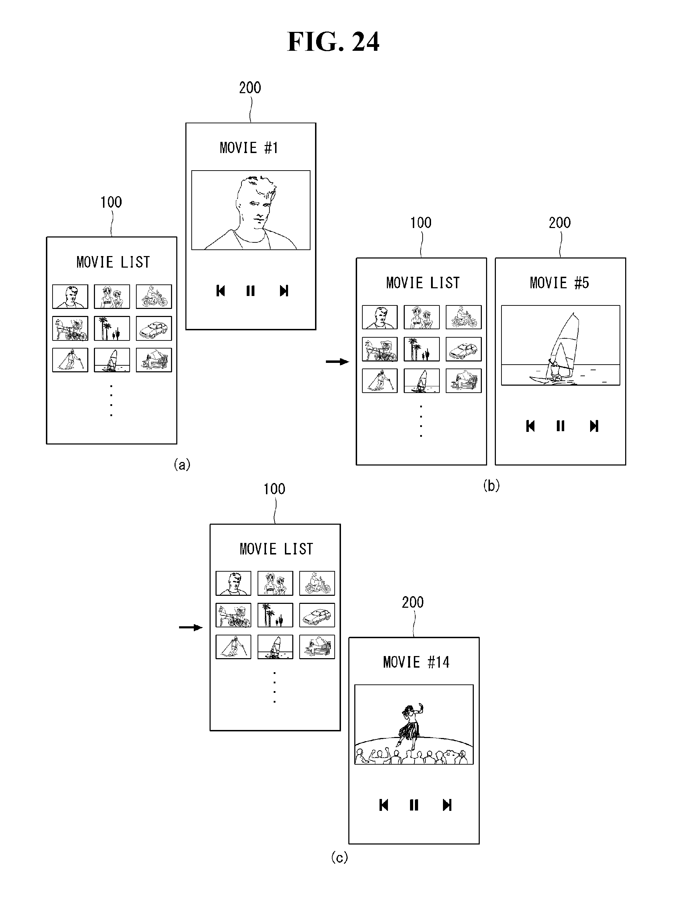

With reference to FIG. 24(a), the display unit 151 of the mobile terminal 100 displays a file list, and a different terminal 200 located within a predetermined distance from the mobile terminal 100 executes one file from the file list. Here, the lower part of one side of the different terminal 200 can be sensed by the sensing unit 140, which is illustrated in FIG. 24(a). In this case, the controller can transmit information about a file at the top of the displayed file list to the different terminal 200. Therefore, the different terminal 200 can execute the first file from the file list.

Afterwards, while one side of the different terminal 200 is being sensed by the sensing unit 140, the one side of the different terminal 200 can change its location sensed by the sensing unit 140. In other words, the different terminal 200 can move toward a lower part of the sensing unit 140, which is illustrated in FIGs. 24(a) and (b). In this case, the controller 180 can transmit to the different terminal 200 information about one file corresponding to the location of the different terminal 200 sensed by the sensing unit 140 from among the displayed file list. Therefore, according to FIG. 24(b) which shows a situation where the whole of one side of the different terminal 200 is sensed by the sensing unit 140, the controller 180 can transmit information about a file located at an intermediate location among the file list to the different terminal 200, and the different terminal 200 can execute the file at the intermediate location.

Afterwards, the different terminal 200 can move toward a lower part of the sensing unit 140, which is illustrated in FIGs. 24(b) and (c). Therefore, the upper part of one side of the different terminal 200 can be sensed by the sensing unit 140, which is illustrated in FIG. 24(c). In this case, the controller 180 can transmit to the different terminal 200 information about a file located at the bottom of the displayed file list. Therefore, the different terminal 200 can execute the last file from among the file list.

In this way, the present invention enables the user to figure out the file list and content thereof at the same time, thereby improving user intuitiveness. Also, the present invention improves user convenience since movement between pages within the same terminal is minimized.

Meanwhile, if a different terminal 200 is sensed by the sensing unit 140 while one file selected from the displayed file list is being played, the controller 180 can display either of a representative thumbnail image for each interval of the file under execution and a control menu on the different terminal 200 by transmitting file information about the file under execution to the different terminal 200.

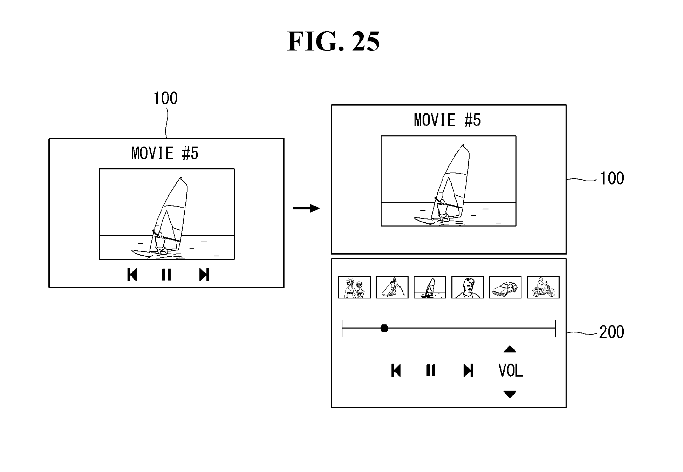

With reference to FIG. 25(a), the mobile terminal 100 executes a video file. FIG. 25 assumes that the mobile terminal 100 is in a horizontal display mode. The present invention is not limited to the aforementioned assumption; however, the present invention can also be applied when the mobile terminal 100 is in a vertical display mode. Also, FIG. 25 further assumes that the mobile terminal 100 executes a video file. However, the present invention is not limited to the aforementioned assumption and can also be applied to the case of executing various types of files as described above.

Afterwards, as shown in FIG. 25(b), a different terminal 200 can approach within a predetermined distance from the mobile terminal 100 so that the sensing unit 140 disposed on one side of the mobile terminal 100 can sense the approach. If the sensing unit 140 senses the different terminal 200, the controller 180 can transmit information about a file executed in the mobile terminal 100 to the different terminal 200. In case the file executed in the mobile terminal 100 is a video file, the different terminal 200 can display various control menu items, namely various objects for controlling execution of a video file, including an indicating bar for play interval, representative thumbnail for each interval, fast forward, rewind, play/stop, mute, and volume. Therefore, the user can control a video file executed in the mobile terminal 100 by selecting an object displayed on the different terminal 200.

Meanwhile, if a different terminal 200 is displaced sequentially from one part to the other part of the sensing unit 140, the controller 180 can transform either of the display unit 151 and the different terminal 200 to a predefined display mode.

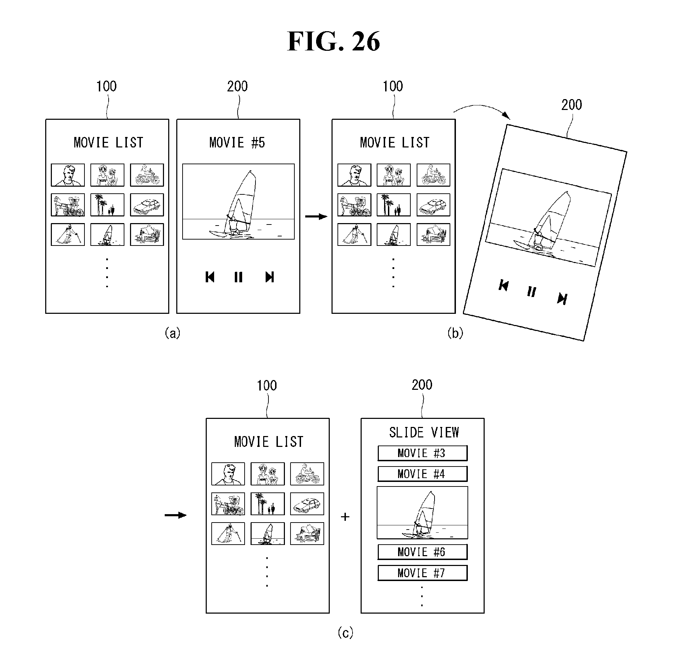

With reference to FIG. 26(a), the display unit 151 of the mobile terminal 100 displays a file list, and a different terminal 200 located within a predetermined distance from the mobile terminal 100 executes one file from the file list. Afterwards, the upper part to the lower part of one side of the mobile terminal 100 adjacent to the different terminal 200 can be displaced sequentially, the operation of which is shown in FIGs. 26(b) and 26(c). At this time, what is called "displaced" can mean that one side of the mobile terminal and one side of the different terminal 200 located within a predetermined distance from each other can be located beyond the predetermined distance. In other words, the sensing unit 140 of the mobile terminal 100 is made to be incapable of sensing the displaced different terminal 200. As a result, as shown in FIG. 26(c), the display unit 151 of the mobile terminal 100 can continuously display the file list, and the different terminal 200 can switch to a slide view mode based on the file under execution before displacement of the different terminal 200. At this time, as shown in FIG. 26(c), the slide view mode can indicate a situation where a file execution screen is formed in the middle of the display unit 151 and representative thumbnails about other files are displayed around the corresponding screen. In this case, screen arrangement in the slide view mode can be implemented in various ways.

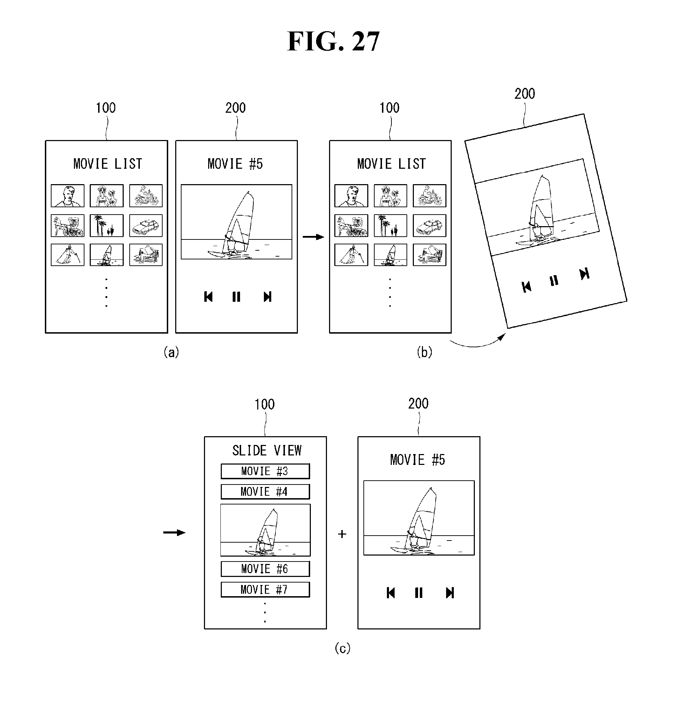

With reference to FIG. 27(a), the display unit 151 of the mobile terminal 100 displays a file list, and a different terminal 200 located within a predetermined distance from the mobile terminal 100 executes one file from the file list. Afterwards, the upper part to the lower part of one side of the mobile terminal 100 adjacent to the different terminal 200 can be displaced sequentially, the operation of which is shown in FIGs. 27(b) and 27(c). As a result, as shown in FIG. 27(c), the different terminal 200 can continuously execute the corresponding file, and the mobile terminal 100 can switch to the slide view mode based on the file under execution in the different terminal 200 before displacement of the different terminal 200.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal, comprising:
a display;
a sensor configured to detect one or more external terminals located within a threshold distance from the mobile terminal;
a wireless communication unit; and
a controller configured to:
cause the display to display a first screen; and
cause the wireless communication unit to transmit first information to a first external terminal when the first external terminal is detected by the sensor;
wherein the transmitted first information relates to a second screen associated with the first screen for displaying the second screen on the first external terminal.

2. The mobile terminal of claim 1, wherein the sensor is further configured to distinguish between detection of the first external terminal located proximate a first side of the mobile terminal and the first external terminal located proximate a second side of the mobile terminal.

3. The mobile terminal in any one of claims 1 or 2, wherein the second screen includes:
additional information related to content displayed on the first screen,
a previous screen with respect to the first screen wherein at least the previous screen and first screen are sequential, or
a next screen with respect to the first screen wherein at least the first screen and next screen are sequential.

4. The mobile terminal of claim 3, wherein:
the sensor comprises a first side sensor disposed on a first side of the mobile terminal and a second side sensor disposed on a second side of the mobile terminal; and
the second screen includes the previous screen or the next screen based on whether the first external terminal is located proximate the first side or the second side of the mobile terminal.

5. The mobile terminal of claim 4, wherein:
the first side corresponds to an upper side of the mobile terminal and the second side corresponds to a lower side of the mobile terminal; or
the first side corresponds to a left side of the mobile terminal and the second side corresponds to a right side of the mobile terminal.

6. The mobile terminal in any one of claims 1 to 5, wherein:
the second screen comprises a control menu corresponding to the first screen; and
the controller is further configured to cause the display to display an editing screen in response to a selection of an editing function included in the control menu.

7. The mobile terminal in any one of claims 1 to 6, wherein:
the first screen comprises information related to a received message; and
the second screen comprises a screen for composing a response to the received message.

8. The mobile terminal in any one of claims 1 to 7, wherein the controller is further configured to cause the wireless communication unit to transmit second information to a second external terminal when the second external terminal is detected by the sensor while the first external terminal is detected;
wherein the transmitted second information relates to a third screen associated with the first screen for displaying the third screen on a display of the second external terminal.

9. The mobile terminal of claim 8, wherein:
the first screen comprises a plurality of information items; and
the third screen comprises an information entry screen for inputting a new information item.

10. The mobile terminal in any one of claims 1 to 9, wherein:
the sensor is further configured to detect movement of the first external terminal with respect to the mobile terminal; and
the controller is further configured to cause the wireless communication unit to transmit updated first information to the first external terminal to change the second screen displayed on the display of the first external terminal when the sensor detects movement of the first external terminal in a first direction.

11. A mobile terminal, comprising:
a display;
a sensor configured to detect one or more external terminals located within a threshold distance from the mobile terminal;
a wireless communication unit; and
a controller configured to:
cause the display to display a plurality of files; and
cause the wireless communication unit to transmit first information when the first external terminal is detected by the sensor;
wherein the first information is related to a first file of the plurality of files for displaying the first file on the first external terminal.

12. The mobile terminal of claim 11, wherein the controller is further configured to cause the display to display a navigation menu associated with the plurality of files after the first file is displayed on the first external terminal.

13. The mobile terminal of claim 12, wherein the controller is further configured to cause the wireless communication unit to transmit updated first information to the first external terminal in response to an input to the navigation menu.

14. The mobile terminal in any one of claims 11 to 13, wherein:
the sensor is further configured to detect an alignment position of the first external terminal relative to the mobile terminal; and
the controller is further configured to select the first file of the plurality of files for transmitting the first information based on the detected alignment position.

15. A method for controlling a mobile terminal, the method comprising:
displaying a first screen;
detecting a first external terminal located within a threshold distance from the mobile terminal; and
transmitting first information to the first external terminal wherein the first information relates to a second screen associated with the first screen for displaying the second screen on the first external terminal.
